# EUROPÄISCHE PATENTSCHRIFT

(11) **EP 1 811 194 B1**
(45) Veröffentlichungstag und Bekanntmachung des Hinweises auf die Patenterteilung: **30.07.2008**
(21) Anmeldenummer: 07000399.1
(22) Anmeldetag: 10.01.2007
(51) Int. Cl.: F16D 65/18, F16D 55/226

(54) **Scheibenbremse**
Disc brake
Frein à disque

(30) Priorität: 23.01.2006 DE 102006003294
(43) Veröffentlichungstag der Anmeldung: 25.07.2007
(73) Patentinhaber: BPW Bergische Achsen KG, 51674 Wiehl (DE)
(72) Erfinder: Dowe, Günter, 51588 Nürnbrecht (DE); Pehle, Michael, 51371 Leverkusen (DE)
(74) Vertreter: Christophersen & Partner

(56) Entgegenhaltungen:
- EP-A- 1 384 913
- DE-A1- 3 716 202
- DE-B3- 10 242 397
- DE-C1- 10 219 148

## Beschreibung

Die Erfindung betrifft eine Scheibenbremse mit einem Bremsgehäuse, einem gegen einen Bremsbelag arbeitenden und entlang einer Druckstempelachse des Bremsgehäuses verschiebbaren Druckstempel, und einer Zuspanneinrichtung zum Betätigen des Druckstempels, die einen verschwenkbaren und hierzu rückwärtig an einer Drehlagerung des Bremsgehäuses abgestützten Zuspannhebel aufweist, der sich andererseits über ein quer zur Druckstempelachse angeordnetes Flachlager gegenüber dem Druckstempel abstützt.

Eine derartige Scheibenbremse ist aus der DE 37 16 202 A1 bekannt. Die Druckstempel der Scheibenbremse sitzen in einer Traverse, welche in einer Führung in dem Bremssattel parallel zur Achse der Bremsscheibe verschieblich geführt ist. Für die Zuspannung der Bremse ist in dem Bremsgehäuse ein Zuspannhebel gelagert, an dem ein Exzenterabschnitt ausgebildet ist. Im Kraftfluß zwischen Exzenterabschnitt und Traverse befindet sich ein quer verschiebliches Kulissenelement in Gestalt einer Druckplatte. An diesem Kulissenelement liegt einerseits der Exzenterabschnitt reibschlüssig an, während sich das Kulissenelement andererseits über ein ebenes Wälzlager gegen die Traverse abstützt. Der reibschlüssige Kontakt zwischen dem Exzenterabschnitt und dem Kulissenelement erfolgt durch linienförmiges Abwälzen entsprechend der Schwenklage des Zuspannhebels. Infolge des reibschlüssigen Abwälzens ändert sich laufend der Ort der Druckausübung auf das Kulissenelement. Entsprechend erfährt das Kulissenelement eine Druckbelastung einmal mehr in ihrer Mitte, und in anderen Fällen mehr zu seinem Rand hin. Problematisch ist, wenn das Kulissenelement, ausgelöst zum Beispiel durch starke Erschütterungen im Fahrbetrieb, unter dem Exzenter verrutscht. Diese Situation kann vor allem eintreten, solange der Reibschluß zum Exzenter noch nicht hinreichend groß ist. Kommt es zu einem solchen Verrutschen, kann dies bei weiterer Zuspannung zu einem vorzeitigen Blockieren des Verschiebeweges des Kulissenelements führen, und damit zu einem extremen Materialverschleiß an den Abwälzflächen.

Aus der DE 43 07 019 A1 ist eine Scheibenbremse mit einer Zuspannwelle bekannt, die sich auf der bremsscheibenzugewandten Seite über eine Drehlagerung an dem Druckstempel abstützt. An der bremsscheibenabgewandten Seite stützt sich die Zuspannwelle über eine zu der Drehlagerung exzentrische Kontur an einer ebenen Druckfläche des Bremsgehäuses ab. Die Kontur setzt sich aus mindestens zwei Kreisbögen mit unterschiedlichen Radien zusammen. Auf diese Weise soll der Betrag einer beim Verdrehen der Zuspannwelle auftretenden Bewegung des Druckstempels relativ zur Zuspannwelle und in Richtung parallel zur Bremsscheibenebene minimiert sein.

Eine weitere Scheibenbremse mit exzentrischer Zuspannwelle ist aus der EP 0 553 105 B1 bekannt. Die Arbeitsbereiche der Zuspannwelle stützen sich bremsscheibenzugewandt und bremsscheibenabgewandt über halbkreisförmige Wälzlager gegen einerseits eine den Druckstempel aufnehmende Traverse, und andererseits gegen das Bremsgehäuse ab. Zur Erzielung der Zuspannung sind die beiden Wälzlagerungen zueinander versetzt angeordnet. Bei dieser Scheibenbremse erfolgt keine exakte Geradführung der Traverse bzw. des Druckstempels, vielmehr führt die Traverse innerhalb des Bremsgehäuses eine leichte Verschwenkbewegung aus.

Der Erfindung liegt die **Aufgabe** zugrunde, eine im Vergleich zum Stand der Technik verbesserte, mit verschleißarmer Zuspannung arbeitende Scheibenbremse zu schaffen.

Zur **Lösung** dieser Aufgabe ist eine gattungsgemäße Scheibenbremse gekennzeichnet durch ein im Kraftfluß zwischen dem Zuspannhebel und dem Flachlager angeordnetes Gelenk, welches in Richtung quer zur Druckstempelachse formschlüssig arbeitet. Das im Kraftfluß zwischen Zuspannhebel und Flachlager angeordnete Gelenk ist vorzugsweise eine Schalenlagerung, zum Beispiel ein teilkreisförmiges Wälzlager.

Bei dem nachfolgend beschriebenen Ausführungsbeispiel der Scheibenbremse ist die Geometrie der Zuspannung dergestalt, dass sich die Drehlagerung rückwärtig, d.h. gehäuseseitig, und die hintereinandergeschaltete, aus dem Gelenk und dem Flachlager zusammengesetzte Lagerung bremsseitig befindet. In Umkehrung dieser konstruktiven Gestaltung ist es aber auch möglich, die ausschließlich drehbewegliche Lagerung des Zuspannhebels zu der Bremsscheibe hin, und die kombinierte Dreh- und Flachlagerung einschließlich des Kulissenelementes bremsscheibenabgewandt, d.h. hinter dem Zuspannhebel, anzuordnen. Das Flachlager ist in diesem Fall direkt an der Innenseite des Bremsgehäuses anzuordnen.

Vorteilhafte Ausgestaltungen der erfindungsgemäßen Scheibenbremse sind in den Unteransprüchen angegeben.

So ist es von Vorteil, wenn die eine Schale der Schalenlagerung eine Kreissegmentfläche an dem Zuspannhebel, und die andere Schale eine korrespondierende Kreissegmentfläche an einem quer zu der Druckstempelachse verschiebbaren Kulissenelement ist.

Ferner ist von Vorteil, wenn sich das Flachlager an einem Druckstück befindet, welches im Zuspannweg zwischen Zuspannhebel und Druckstempel angeordnet ist. Das Druckstück kann sich in diesem Fall gegen eine innen an dem Bremsgehäuse ausgebildete, zu der Druckstempelachse parallele Führungsfläche abstützen und auf diese Weise nicht nur das Druckstück selbst, sondern auch die Traverse sowie den oder die Druckstempel axial führen.

Eine weitere Ausgestaltung ist gekennzeichnet durch ein Federelement, dessen federnder Abschnitt sich einerseits an dem Druckstück und andererseits an einer Seitenfläche des Kulissenelements abstützt. Das Kulissenelement ist hierbei mittels des Flachlagers an dem Druckstück abgestützt.

Zur Vereinfachung der Konstruktion trägt bei, wenn das Federelement als einteilige Blattfeder gestaltet ist. An dem Federelement kann einstückig ein Lagerblech angeformt sein, welches Bestandteil des Flachlagers ist oder sich parallel zu dem Flachlager erstreckt.

Ferner wird vorgeschlagen, dass das Lagerblech einen sich am Boden einer Ausnehmung des Druckstücks abstützenden langen Schenkel, und der federnde Abschnitt einen sich an einer Seitenwand der Ausnehmung abstützenden kurzen Schenkel des Federelements bildet.

Im Folgenden wird unter Bezugnahme auf die Zeichnungen ein Ausführungsbeispiel erläutert. Auf der Zeichnung zeigen:
- Fig. 1: in einer vereinfachten Schnittdarstellung eine Fahrzeug-Scheibenbremse des Doppelstempel-Bautyps;
- Fig. 2: eine vergrößerte Teildarstellung der Fig. 1;
- Fig. 3: ein aus einem Federelement und einem Lagerblech zusammengesetztes Bauteil in einer ersten Ansicht;
- Fig. 4: das Bauteil nach Fig. 3 in einer zweiten Ansicht und
- Fig. 5: das Bauteil nach Fig. 3 in einer dritten Ansicht.

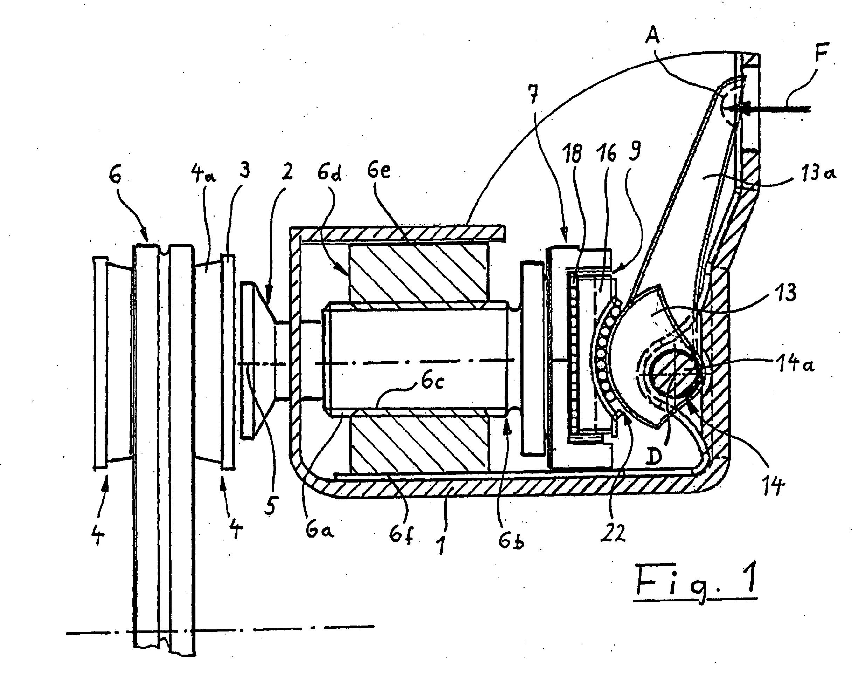

Die Fig. 1 zeigt in vereinfachter Darstellung die hier interessierenden Einzelheiten einer Radbremse. Die Radbremse ist hier eine Fahrzeug-Scheibenbremse, vorzugsweise des Schwimmsattel-Bautyps.

In einem Bremsgehäuse 1 der Scheibenbremse sind Druckstempel 2 geführt, die sich nach Überwindung des Lüftspiels mit ihrer Stempelplatte gegen die Rückseite einer Belagplatte 3 des einen Bremsbelags 4 der Scheibenbremse abstützen. Von dem Bremsbelag 4 ist in der Fig. 1 außerdem der Reibbelag 4a dargestellt, sowie ferner die mit dem Fahrzeugrad umlaufende Bremsscheibe 6 der Scheibenbremse.

Zum Ausgleich des sich mit der Zeit einstellenden Bremsbelagverschleißes ist die hier beschriebene Scheibenbremse mit einer mechanisch arbeitenden Nachstelleinrichtung versehen. Die Nachstelleinrichtung befindet sich in einem mit einem Außengewinde 6a versehenen Nachstellelement 6b. Das Außengewinde 6a greift in ein Innengewinde 6c einer Traverse 6d. Die Traverse 6d ist nach Art eines Joches gestaltet, welches sich parallel zur Bremsscheibe 6 erstreckt. Mittig in der Traverse 6d befindet sich das Innengewinde 6c, wohingegen an den Enden der Traverse 6d jeweils ein Druckstempel 2 starr befestigt ist. Die dargestellte Scheibenbremse ist daher eine Doppelstempel-Bremse. Jedoch lässt sich die Erfindung ebenso bei einer Einstempelbremse realisieren.

Im Rahmen der Erfindung ist es nicht erforderlich, dass sich das Nachstellelement 6b, wie dargestellt, zentral in der Traverse und damit zwischen den beiden Druckstempeln 2 befindet. Ebenso ist es möglich, mit zwei synchronisierten Nachstelleinrichtungen zu arbeiten, wobei diese jeweils in Verlängerung der Druckstempel 2 angeordnet sind. Eine solche technische Lösung ist z.B. in der EP 0 553 105 B1 beschrieben.

Die die Druckstempel 2 aufnehmende Traverse 6d kann in dem Bremsgehäuse 1 geführt sein. Diese Führung erfolgt parallel zu den Mittelachsen 5 der Druckstempel über eine obere gehäusefeste Führung 6e und eine untere gehäusefeste Führung 6f.

Zur Übertragung des von einem Bremszylinder und vorzugsweise einem druckluftbetätigten Bremszylinder erzeugten Zuspannkraft dient ein drehbar in dem Bremsgehäuse angeordneter, im Querschnitt exzentrisch gestalteter Zuspannhebel 13, den man daher auch als Zuspannwelle bezeichnen könnte. An dem Zuspannhebel 13 befindet sich ein Hebelarm 13a, an dessen freiem Ende bei A sich die hier nur anhand der Kraft F symbolisierte Betätigungsstange des Bremszylinders abstützt. Bei Betätigung des Bremszylinders verdreht der auf der Drehachse D einer Drehlagerung 14 gelagerte Zuspannhebel 13, und schiebt infolge seiner exzentrischen Bauweise die Druckstempel 2 in Richtung Bremsscheibe 6. Im axialen Kraftfluß befinden sich außerdem ein Kulissenelement 16, ein Druckstück 7, das Nachstellelement 6b der Nachstelleinrichtung, sowie die Traverse 6d mit den beiden Druckstempeln 2.

Die Lagerung des Zuspannhebels 13 an dem Bremsgehäuse 1 erfolgt durch die rückwärtig angeordnete Drehlagerung 14. Diese bewirkt eine ausschließlich drehbewegliche Lagerung des Zuspannhebels 13 in dem Bremsgehäuse 1. Die Drehlagerung 14 erfolgt auf einem Drehzapfen 14 a des Bremsgehäuses 1 mit der Drehachse D. Die Drehachse D erstreckt sich, wie Fig. 1 erkennen lässt, parallel zu der Bremsscheibe 6 der Scheibenbremse.

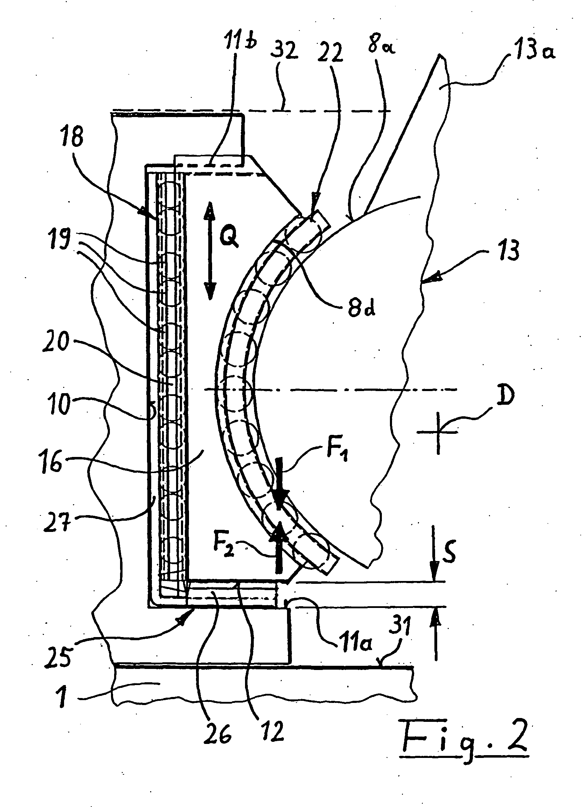

Die Fign. 1 und 2 zeigen, dass der Zuspannhebel 13, der Bremsscheibe 6 zugewandt, mit einer Querschnittskontur versehen ist, die ein konvex nach außen gewölbtes Teilkreissegment 8a beschreibt. Dessen geometrischer Mittelpunkt liegt vertikal versetzt und damit leicht exzentrisch zu der Drehachse D der Drehlagerung 14 bzw. des Drehzapfens 14a. Auf diese Weise kommt es bei einem Verschwenken des Zuspannhebels 13 zu einer Vorverlagerung von dessen Teilkreissegment 8a, und damit zu dem gewünschten Vortrieb. Die Größe dieses Vortriebs hängt von dem Achsenversatz, d.h. von der Exzentrizität zwischen dem Bezugsmittelpunkt des Teilkreissegments 8a und der Drehachse D ab.

Ein zu dem Teilkreissegment 8a korrespondierendes, d.h. einen im wesentlichen gleichen Radius aufweisendes Teilkreissegment 8d befindet sich an dem Kulissenelement 16. Während also das Teilkreissegment 8a eine konvexe Schale formt, formt das Teilkreissegment 8d eine korrespondierende, konkave Schale. Beide Schalen 8a, 8b gemeinsam bilden eine kreissegmentförmige Schalenlagerung 22. Diese stellt daher ein ausschließlich drehbewegliches Gelenk 22 zwischen dem Zuspannhebel 13 und dem Kulissenelement 16 dar.

Das Kulissenelement 16 sitzt querbeweglich in einer Ausnehmung 9 des Druckstücks 7. Die Ausnehmung 9 ist rechteckig mit einem ebenen Boden 10, einer ersten Seitenwand 11a und einer zweiten Seitenwand 11 b. Das Kulissenelement 16 stützt sich über ein Flachlager 18 an dem Boden 10 ab. Das Flachlager 18 ist ein ebenes Wälzlager, dessen in einer gemeinsamen Ebene angeordneten Wälzkörper 19 durch einen gemeinsamen Lagerkäfig 20 auf Distanz gehalten werden. Die Drehachsen der Wälzkörper 19 erstrecken sich jeweils parallel zu der Drehachse D der Drehlagerung 14. Das Flachlager 18 erstreckt sich quer zum Kraftfluß der Zuspannung und zu den Bewegungsachsen der Druckstempel, d.h. den Druckstempelmittelachsen 5.

Das Kulissenelement 16 ist in Querrichtung Q beweglich in dem Druckstück 7 angeordnet. Hierzu ist die Breite der Ausnehmung 9 in Querrichtung Q größer, als die entsprechende Breite des Kulissenelementes 16. Bei der in den Fign. 1 und 2 dargestellten Drehlage von Hebelarm 13a und Zuspannhebel 13 befindet sich das Kulissenelement 16 nahe der Seitenwand 11 b der Ausnehmung 9. Auf diese Weise besteht an der gegenüberliegenden Seite des Kulissenelements 16 noch ein Spiel S zu der dortigen Seitenwand 11 a. Je mehr der Zuspannhebel entsprechend der Kraftrichtung F (Fig. 1) verschwenkt wird, desto mehr wandert das formschlüssig von dem Zuspannhebel 13 mitgenommene Kulissenelement 16 in Querrichtung Q zu der Seitenwand 11a hin. Die in der Querrichtung Q an der Schalenlagerung 22 wirkenden Formschlußkräfte F1 und F2 sind in Fig. 2 eingezeichnet. Das Kulissenelement 16 gleitet mittels des Flachlagers 18 nahezu reibungsfrei an dem Boden 10 der Ausnehmung 9 entlang.

In Fig. 1 ist dargestellt, dass sich das Druckstück 7 axial gegen das Nachstellelement 6b der Nachstelleinrichtung abstützt. Jedoch ist die Verbindung zwischen Druckstück 7 und Nachstellelement 6b dergestalt, dass sich zum Zwecke der Nachstellung das Nachstellelement 6b gegenüber dem Druckstück 7 drehen kann, wobei zugleich über die Gewindeverbindung 6a, 6c die Traverse 6c vorgetrieben wird.

In der Ausnehmung 9 des Druckstücks befindet sich ein zwei Funktionen zugleich übernehmendes Federelement 25. Dieses setzt sich einstückig aus einem federnden Abschnitt 26 und einem zu dem federnden Abschnitt rechtwinkligen Lagerblech 27 zusammen. Vorzugsweise besteht das Federelement aus einem geeigneten Federstahl.

Das Lagerblech 27 ist eine flache Platte, welche das Flachlager 18 zu dem Boden 10 hin abstützt. Die Oberfläche des Lagerblechs 27 bildet eine verschleißfeste Rollbahn für die darauf abwälzenden Wälzkörper 19 des Flachlagers. Der federnde Abschnitt 26 des Federelements 25 ist eine als Druckfeder dienende Blattfeder, welche sich einerseits an der Seitenwand 11a des Druckstücks 7, und andererseits an einer gegenüberliegenden Seitenfläche 12 des Kulissenelements 16 abstützt.

Der federnde Abschnitt 26 erzeugt eine elastische Trennkraft zwischen der Seitenwand 11a und der Seitenfläche 12. Deren Wirkung ist die folgende: Wie bereits beschrieben, erzwingt die Verdrehung des Zuspannhebels 13 die Querbewegung des Kulissenelements 16 in Richtung zu der Seitenwand 11a des Druckstücks. Dort aber sitzt der federnde Abschnitt 26 des Federelementes. Die seitliche Zwangsbewegung auf das Kulissenelement 16 übt daher über den federnden Abschnitt 26 eine seitliche Druckkraft auf das Druckstück 7 aus, wodurch das Druckstück 7 gegen eine Führungsfläche 31 gedrückt wird. Die Führungsfläche 31 befindet sich innen an dem Bremsgehäuse 1, sie erstreckt sich parallel zu der Druckstempelachse 5. Im Ergebnis bewirkt daher der federnde Abschnitt 26 des Federelements, dass sich das Druckstück 7 stets an der Führungsfläche 31 des Bremsgehäuses abstützt. Die Feder 26 führt daher zu einer exakten und stets spielfreien Parallelführung des Druckstücks 7, und damit auch zu der gewünschten Parallelführung von Traverse 6d und Druckstempeln 2. Eine Führung auch auf der entgegengesetzten Seite, d.h. auf der in Fig. 2 eingezeichneten Linie 32, ist nicht erforderlich.

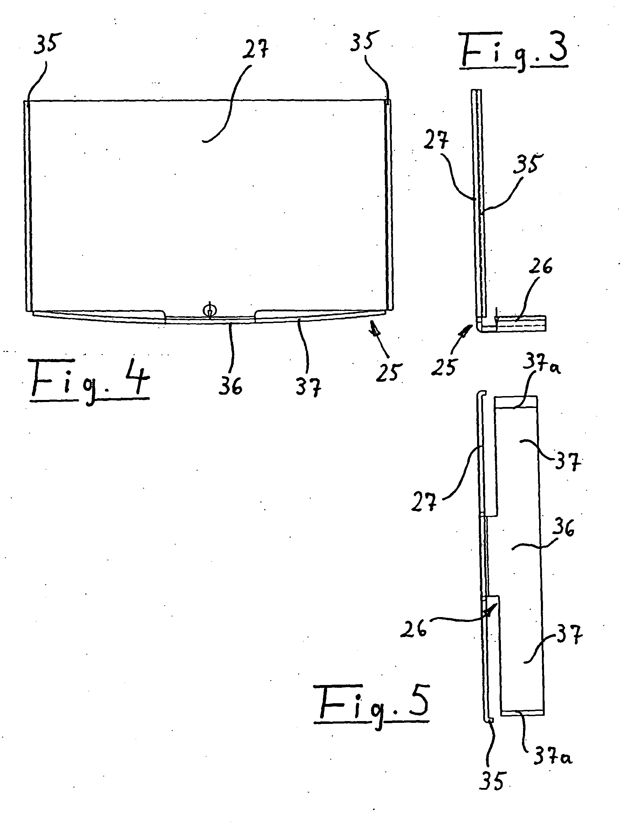

Auf den Fign. 3, 4 und 5 ist das Federelement 25 in drei unterschiedlichen Ansichten wiedergegeben. In einer Seitenansicht, wie sie auch der Einbaulage der Fign. 1 und 2 entspricht, ist das Federelement 25 L-förmig gestaltet. Den langen Schenkel bildet das Lagerblech 27, den dem gegenüber kürzeren Schenkel der federnde Abschnitt 26. Das Lagerblech 27 ist überwiegend eben, nur im Bereich der Seitenränder 35 sind diese geringfügig hochgezogen. Auf diese Weise fixieren die Seitenränder 35 die zylindrischen Wälzkörper 19 (Fig. 2) in deren Längsrichtung.

Der die Federfunktion übernehmende Schenkel des L-förmigen Federelementes weist einen mit dem Lagerblech 27 unmittelbar rechtwinklig verbundenen Mittelabschnitt 36 auf. Von dem Mittelabschnitt 36 stehen zu beiden Seiten federnde Arme 37 ab. Bei 37a stützen sich die Enden dieser Arme 37 elastisch gegen die Seitenfläche 12 des Kulissenelements 16 ab. In der Einbaulage ist diese Abstützung daher im Wesentlichen symmetrisch, wodurch ein verkantungsfreier Druck auf das Kulissenelement 16 erreicht wird, wenn sich dieses in der Ausnehmung 9 des Druckstücks 7 verschiebt.

Bei dem hier beschriebenen Ausführungsbeispiel ist die Geometrie der Zuspannung dergestalt, dass sich die Drehlagerung 14 gehäuseseitig, und die kombinierte Lagerung aus Schalenlagerung 22 und Flachlager 18 bremsseitig befindet. In Umkehrung dieser konstruktiven Gestaltung ist es aber ebenso möglich, die rein drehbewegliche Lagerung des Zuspannhebels an dem Druckstück 7 anzuordnen, und die kombinierte Dreh- und Flachlagerung einschließlich des Kulissenelementes 16 gehäuseseitig anzuordnen. Das Flachlager 18 wird in diesem Fall direkt an der Innenseite des Bremsgehäuses angeordnet.

### Bezugszeichen

- 1: Bremsgehäuse
- 2: Druckstempel
- 3: Belagplatte
- 4: Bremsbelag
- 4a: Reibbelag
- 5: Druckstempelmittelachse
- 6: Bremsscheibe
- 6a: Außengewinde
- 6b: Nachstellelement
- 6c: Innengewinde
- 6d: Traverse
- 6e: Führung
- 6f: Führung
- 7: Druckstück
- 8a: Teilkreissegment
- 8b: Mittelpunktslinie
- 8c: Drehachse
- 8d: Teilkreissegment
- 9: Ausnehmung
- 10: Boden
- 11a: Seitenwand
- 11 b: Seitenwand
- 12: Seitenfläche des Kulissenelementes
- 13: Zuspannhebel
- 13a: Hebelarm des Zuspannhebels
- 14: Drehlagerung
- 14a: Drehzapfen
- 16: Kulissenelement
- 18: Flachlager
- 19: Wälzkörper
- 20: Lagerkäfig
- 22: Schalenlagerung
- 25: Federelement
- 26: Federnder Abschnitt des Federelements
- 27: Lagerblech
- 31: Führungsfläche
- 32: Linie
- 35: Seitenrand
- 36: Mittelabschnitt
- 37: Arm
- 37a: Anlageort

- A: Ort
- F: Kraft
- D: Drehachse
- Q: Querrichtung
- S: Seitliches Spiel
- F1: Formschlußkraft
- F2: Formschlußkraft

## Patentansprüche

1. Scheibenbremse mit einem Bremsgehäuse (1), einem gegen einen Bremsbelag (4) arbeitenden und entlang einer Druckstempelachse (5) des Bremsgehäuses (1) verschiebbaren Druckstempel (2), und einer Zuspanneinrichtung zum Betätigen des Druckstempels (2), die einen verschwenkbaren und hierzu rückwärtig an einer Drehlagerung (14) des Bremsgehäuses (1) abgestützten Zuspannhebel (13) aufweist, der sich andererseits über ein quer zur Druckstempelachse (5) angeordnetes Flachlager (18) gegenüber dem Druckstempel (2) abstützt,
**gekennzeichnet durch**
ein im Kraftfluss zwischen dem Zuspannhebel (13) und dem Flachlager (18) angeordnetes Gelenk (22), welches in Richtung quer (Q) zur Druckstempelachse (5) formschlüssig arbeitet.

2. Scheibenbremse nach Anspruch 1, **dadurch gekennzeichnet, dass** das Gelenk (22) als Schalenlagerung ausgebildet ist.

3. Scheibenbremse nach Anspruch 2, **dadurch gekennzeichnet, dass** die eine Schale der Schalenlagerung (22) eine Kreissegmentfläche (8a) an dem Zuspannhebel (13), und die andere Schale eine korrespondierende Kreissegmentfläche (8d) an einem quer (Q) zu der Druckstempelachse (5) verschiebbaren Kulissenelement (16) ist.

4. Scheibenbremse nach einem der Ansprüche 2 oder 3, **gekennzeichnet durch** ein teilkreisförmiges Wälzlager als Schalenlagerung (22).

5. Scheibenbremse nach Anspruch 3 oder 4, **dadurch gekennzeichnet, dass** sich das Kulissenelement (16) an dem Flachlager (18) abstützt.

6. Scheibenbremse nach einem der vorangehenden Ansprüche, **dadurch gekennzeichnet, dass** sich das Flachlager (18) an einem im Zuspannweg zwischen Zuspannhebel (13) und Druckstempel (2) angeordneten Druckstück (7) befindet.

7. Scheibenbremse nach Anspruch 6, **dadurch gekennzeichnet, dass** sich das Druckstück (7) gegen eine innen an dem Bremsgehäuse (1) ausgebildete, zu der Druckstempelachse (5) parallele Führungsfläche (31) abstützt.

8. Scheibenbremse nach Anspruch 6 oder 7, **gekennzeichnet durch** ein Federelement (25), dessen federnder Abschnitt (26) sich einerseits an dem Druckstück (7) und andererseits an einer Seitenfläche (12) eines Kulissenelements. (16) abstützt, welches über das Flachlager (18) in dem Druckstück (7) abgestützt ist.

9. Scheibenbremse nach Anspruch 8, **gekennzeichnet durch** eine einteilige Blattfeder als Federelement (25).

10. Scheibenbremse nach Anspruch 8 oder 9, **dadurch gekennzeichnet, dass** an dem Federelement (25) einstückig ein Lagerblech (27) angeformt ist, wobei das Lagerblech (27) Bestandteil des Flachlagers (18) ist oder sich parallel zu dem Flachlager (18) erstreckt.

11. Scheibenbremse nach Anspruch 10, **dadurch gekennzeichnet, dass** das Lagerblech (27) einen sich am Boden (10) einer Ausnehmung (9) des Druckstücks (7) abstützenden langen Schenkel, und der federnde Abschnitt (26) einen sich an einer Seitenwand (11a) der Ausnehmung (9) abstützenden kurzen Schenkel des Federelements (25) bildet.

12. Scheibenbremse nach Anspruch 10 oder 11, **dadurch gekennzeichnet, dass** das Federelement (25) einen die Verbindung zu dem Lagerblech (27) bereitstellenden Mittelabschnitt (36), sowie von dem Mittelabschnitt (36) zu beiden Seiten abstehende, federnde Arme (37) aufweist.

13. Scheibenbremse nach einem der vorangehenden Ansprüche, **dadurch gekennzeichnet, dass** das Flachlager (18) ein ebenes Wälzlager ist, dessen Wälzkörper (19) in einem Lagerkäfig (20) angeordnet sind.

## Claims

1. Disc brake comprising a brake housing (1), a pressure plunger (2) which operates against a brake lining (4) and can be displaced along a pressure plunger axis (5) of the brake housing (1), and a brake application device for actuating the pressure plunger (2), which brake application device has a pivotable brake application lever (13) which is supported at the rear relative thereto on a swivel bearing (14) of the brake housing (1) and at the other side is supported relative to the pressure plunger (2) via a flat bearing (18) arranged transversely to the pressure plunger axis (5),
**characterised by**
an articulation (22) which is arranged in the force flow between the brake application lever (13) and the flat bearing (18) and which operates in a direction transverse (Q) to the pressure plunger axis (5).

2. Disc brake according to claim 1, **characterised in that** the articulation (22) is designed as a shell bearing.

3. Disc brake according to claim 2, **characterised in that** one shell of the shell bearing (22) is a circular segment surface (8a) on the brake application lever (13) and the other shell is a corresponding circular segment surface (8d) on a slide element (16) which can be displaced transversely (Q) to the pressure plunger axis (5).

4. Disc brake according to one of claims 2 or 3, **characterised by** a rolling bearing in the shape of part of a circle as the shell bearing (22).

5. Disc brake according to claim 3 or 4, **characterised in that** the slide element (16) is supported on the flat bearing (18).

6. Disc brake according to one of the preceding claims, **characterised in that** the flat bearing (18) is located on a pressure piece (7) which is arranged in the brake application path between the brake application lever (13) and the pressure plunger (2).

7. Disc brake according to claim 6, **characterised in that** the pressure piece (7) is supported against a guide surface (31) which is formed on the inside of the brake housing (1) and runs parallel to the pressure plunger axis (5).

8. Disc brake according to claim 6 or 7, **characterised by** a spring element (25), the flexible section (26) of which is supported at one side on the pressure piece (7) and at the other side on a side face (12) of a slide element (16) which is supported via the flat bearing (18) in the pressure piece (7).

9. Disc brake according to claim 8, **characterised by** a one-piece leaf spring as the spring element (25).

10. Disc brake according to claim 8 or 9, **characterised in that** a bearing plate (27) is integrally formed on the spring element (25), wherein the bearing plate (27) forms part of the flat bearing (18) or extends parallel to the flat bearing (18).

11. Disc brake according to claim 10, **characterised in that** the bearing plate (27) forms a long leg which is supported on the bottom (10) of a recess (9) of the pressure piece (7), and the flexible section (26) forms a short leg of the spring element (25) which is supported on a side wall (11a) of the recess (9).

12. Disc brake according to claim 10 or 11, **characterised in that** the spring element (25) has a central section (36) which provides the connection to the bearing plate (27), and flexible arms (37) which protrude from both sides of the central section (36).

13. Disc brake according to one of the preceding claims, **characterised in that** the flat bearing (18) is a flat rolling bearing, the rolling bodies (19) of which are arranged in a bearing cage (20).

## Revendications

1. Frein à disque avec un carter de frein (1), un vérin presseur (2) travaillant contre une garniture de frein (4) et pouvant se déplacer le long d'un axe de vérin presseur (5) du carter de frein (1), et un dispositif de serrage pour actionner le vérin presseur (2) qui présente un levier de serrage (13) pivotant et en appui à cet effet à l'arrière contre un logement rotatif (14) du carter de frein (1), qui s'appuie d'autre part sur un palier plat (18) disposé transversalement à l'axe de vérin presseur (5) par rapport au vérin presseur (2),
**caractérisé par**
une articulation (22) disposée dans le flux de force entre le levier de serrage (13) et le palier plat (18), qui travaille par complémentarité de forme dans le sens transversal (Q) à l'axe de vérin presseur (5).

2. Frein à disque selon la revendication 1, **caractérisé en ce que** l'articulation (22) est conformé en logement à coquilles.

3. Frein à disque selon la revendication 2, **caractérisé en ce qu'**une coquille du logement à coquilles (22) est une surface de segment de cercle (8a) sur le levier de serrage (13), et l'autre coquille est une surface de segment de cercle (8d) correspondante sur un élément de coulisse (16) pouvant se déplacer transversalement (Q) à l'axe de vérin presseur (5).

4. Frein à disque selon l'une quelconque des revendications 2 ou 3, **caractérisé par** un palier à roulement en forme de cercle primitif servant de logement à coquilles (22).

5. Frein à disque selon la revendication 3 ou 4, **caractérisé en ce que** l'élément de coulisse (16) s'appuie contre le palier plat (18).

6. Frein à disque selon l'une quelconque des revendications précédentes, **caractérisé en ce que** le palier plat (18) se trouve sur un élément de pression (7) disposé dans la course de serrage entre le levier de serrage (13) et le vérin presseur (2).

7. Frein à disque selon la revendication 6, **caractérisé en ce que** l'élément de pression (7) s'appuie contre une surface de guidage (31) réalisée à l'intérieur sur le carter de frein (1), parallèle à l'axe de vérin presseur (5).

8. Frein à disque selon la revendication 6 ou 7, **caractérisé par** un élément formant ressort (25), dont la section (26) élastique s'appuie d'une part sur l'élément de pression (7) et d'autre part sur une surface latérale (12) d'un élément de coulisse (16) qui est en appui par le palier plat (18) dans l'élément de pression (7).

9. Frein à disque selon la revendication 8, **caractérisé par** un ressort à lame d'un seul tenant comme élément formant ressort (25).

10. Frein à disque selon la revendication 8 ou 9, **caractérisé en ce qu'**une tôle d'appui (27) est formée d'un seul tenant sur l'élément formant ressort (25), la tôle d'appui (27) faisant partie du palier plat (18) ou s'étendant parallèlement au palier plat (18).

11. Frein à disque selon la revendication 10, **caractérisé en ce que** la tôle d'appui (27) forme une branche longue s'appuyant sur le fond (10) d'un évidement (9) de l'élément pression (7) et la section élastique (26) forme une branche courte s'appuyant sur une paroi latérale (11a) de l'évidement (9) de l'élément formant ressort (25).

12. Frein à disque selon la revendication 10 ou 11, **caractérisé en ce que** l'élément formant ressort (25) présente une section médiane (36) préparant la liaison avec la tôle d'appui (27), ainsi que des bras (37) élastiques dépassant des deux côtés de la section médiane (36).

13. Frein à disque selon l'une quelconque des revendications précédentes, **caractérisé en ce que** le palier plat (18) est un palier à roulement plan, dont les éléments roulants (19) sont disposés dans une cage de palier (20).
